# EUROPEAN PATENT SPECIFICATION

(11) **EP 1 616 653 B1**
(45) Date of publication and mention of the grant of the patent: **23.09.2009**
(21) Application number: 05015247.9
(22) Date of filing: 13.07.2005
(51) Int. Cl.: B23K 3/03, H02J 7/00

(54) **Soldering device with cartridge soldering tip and cartridge type battery packs**
Lötvorrichtung mit einer Patronenlötspitze und Batteriepatronen
Dispositif de brasage avec une pointe cartouche de brasage et des cartouches-batteries

(30) Priority: 15.07.2004 US 892780
(43) Date of publication of application: 18.01.2006
(73) Proprietor: Hakko Corporation, Osaka-shi, Osaka (JP)
(72) Inventor: Miyazaki, Mitsuhiko c/o Hakko Corporation, Osaka-shi Osaka (JP); Teraoka, Yoshitomo c/o Hakko Corporation, Osaka-shi Osaka (JP); Kato, Tadashi c/o Hakko Corporation, Osaka-shi Osaka (JP); Yamanaka, Tsuyoshi c/o Hakko Corporation, Osaka-shi Osaka (JP)
(74) Representative: Müller-Boré & Partner Patentanwälte

(56) References cited:
- DE-A1- 2 412 143
- US-A- 3 188 448
- US-A- 4 064 447
- US-A- 4 191 917
- US-A1- 2002 158 107
- US-A1- 2004 016 741
- PATENT ABSTRACTS OF JAPAN vol. 2000, no. 26, 1 July 2002 (2002-07-01) -& JP 2001 245462 A (MATSUSHITA ELECTRIC WORKS LTD), 7 September 2001 (2001-09-07)

## Description

The present application relates to a soldering drive according to the preamble of claim 1 (see, for example, DE 24 12 143).

Soldering irons are used to make secure electrical connections by melting solder and allowing the solder to bond between two electrical devices such as wires and contact points of a circuit. A number of different types of soldering irons are in wide-spread use and have been available for a number of years. Most soldering devices are powered by electrical current, and particularly for industrial applications, the soldering devices use an AC power source. However, there are a few battery powered soldering devices that are available though their performance is somewhat limited. Examples are shown in U.S. Patent Nos. 2,973,422; 3,141,087; 3,141,956; 4,064,447 and 5,446,262. In addition, to provide flexibility in a soldering device that has no electrical power connection requirement, there are soldering devices that utilize a gaseous fuel to heat a soldering tip through for example a catalyst or an open flame, as shown for example in U.S. Patent Nos. 5,799,648 and 5,921,231.

The need for a soldering device which can provide the performance of industrial soldering irons with the portability of a non-AC powered device have been somewhat limited. Industrial soldering devices allow the use of a number of different interchangeable cartridge soldering iron tips so that the soldering tip can be replaced easily to allow an operator to select the type of tip to be utilized in a specific soldering operation. Examples of cartridge type soldering devices are shown for example in U.S. Patent Nos. 4,839,501 and 6,710,304.

For the battery powered types of soldering devices, the various styles available are also somewhat limited as they do not include the flexibility which may be desired for hobbyists as well as professional users and craftsmen. Hobbyists may only require a soldering device to make a couple of solder connections at one time, they are generally not using the soldering iron for repetitive purposes on a continuous basis. By comparison, electricians working in certain circumstances may desire a portable battery powered soldering device that is both convenient and fully functional. Examples of these types of operations would include operations on power lines, changing out telephone systems in the field and home repair servicemen. For these types of operations, the control of the temperature of the soldering tip for use with various types of solders specified for certain types of electronic connections may become more important.

D1: DE 24 12 143 A1 discloses a transportable multi-purpose-machine tool comprising a cylindrical housing for accommodating accumulators and charging contacts at a bottom of the housing. In one embodiment, the multi-purpose-machine tool is formed as a soldering device.

US 4 191 917 A discloses a rechargeable battery pack for electric devices comprising rechargeable nickel-cadmium batteries and a printed circuit board for minimizing weight and heat with both a rectifier and a rectifier bypass.

JP 2001/245 462 A describes a portable motor power device and power tool equipped with it comprising a battery cell and a corded power feeder containing a converter which converts a current of AC power source to a DC current_{.}

US 3 188 448 A describes a soldering iron having temperature control means for controlling the energization of a soldering iron heating element to establish a selected idling temperature so as to avoid a rapid deterioration of a soldering tip due to overheating.

US 2004/0016741 A1 discloses a portable adhesive dispensing appliance with adjustable duty cycle in which power is not continuously applied to a heating element but intermittently switched over to a variable duty cycle.

US 2002/0158107 A1 discloses a cartridge type soldering iron with a releasable and replaceable handle so as to be ergonomically friendly to a user's hand.

US 4 064 447 A discloses a cordless portable electrically powered device comprising a battery pack having a pair of standard AC prongs to be inserted into an ordinary AC household receptacle for charging the batteries.

EP 1 017 149 A2 describes a dual-mode non-isolated corded system for portable cordless power tools comprising a cordless battery pack and a corded voltage converter.

It is the object of the invention to provide a soldering device of the cartridge type having a reduced size so that operability and handling is improved in particular when soldering small circuits or components or when operating in an environment having a small operation space.

This object is fulfilled by a soldering device having the features disclosed in claim 1. Preferred embodiments are defined in the dependent claims.

The present invention is directed to a battery powered soldering device with a cartridge type battery system which includes a number of different optional battery packs or connections which can be utilized to provide a full range of soldering features in a cartridge type soldering tip device.

The soldering device comprises a handle for receiving a cartridge soldering tip, the handle including an electrical component for coupling electrical power to the cartridge soldering tip and a power cartridge mount for mounting a power cartridge, and at least one power cartridge for mounting to the power cartridge mount of the handle to provide electrical power to the cartridge soldering tip, the power cartridge being provided with a first chamber and at least one battery therein, the battery being a lithium ion battery or a nickel-hydride battery, at least one battery mounted in the first chamber, a second chamber for holding a circuit board, and a circuit board mounted in the second chamber, the circuit board containing circuitry for coupling and controlling electrical power from the at least one battery to the handle in order to maintain a desired tip temperature of the cartridge soldering tip, at least a further power cartridge which is selected from the group consisting of a cartridge for containing AA batteries; and an attachment cartridge for connecting to a power supply via a cable.

It may be preferable to further provide an on-off switch on the handle, and a protection cap configured to attach to the handle and cover the cartridge soldering tip, the protection cap having a switch lip to force the on-off switch of the handle to the off position whenever the protection cap is attached to the handle.

The power cartridge may be preferably detachable and replaceable.

The battery may be a lithium ion battery. Also, the battery may be at least two nickel hydride batteries.

The one power cartridge may be preferably selected from the group consisting of: a cartridge containing a lithium ion battery; and a cartridge containing nickel-hydride batteries.

It may be preferable to further provide a cartridge holder adapted to receive one of the battery cartridges and connect to the attachment cartridge by a cable.

The soldering device may be preferably provided with an AC adaptor to convert AC current to a DC voltage suitable for powering the soldering device, the AC adaptor connected to the attachment cartridge by a cable.

The soldering device may be preferably adapted to receive a plurality of cartridge soldering tips each having a contact end and a tip end. In this case, each tip is designed for a particular soldering application. The soldering device further comprises an internal connector and switch assembly within the handle adapted to receive the contact end of one of the plurality of soldering tips. The power cartridge has a circuit board to selectively couple power to the internal connector electrically.

These and other objects, features, aspects, and advantages of the present invention will become more apparent from the following detailed description of the preferred embodiments/examples with reference to the accompanying drawings, in which:
Fig. 1 is a side view of the soldering device of the present invention with the protection cap removed;
Fig.2 is a side view of the soldering device with the protection cap attached;
Fig. 3 is a side view of the soldering device and the various cartridges that can be used to provide power to the soldering iron tip;
Fig. 4 is a sidepartially cut-away view of the soldering device and cartridges of Fig. 3;
Fig. 5 is an exploded side view of the soldering device of Fig. 1;
Fig. 6 is a partially cut-away side view of the cartridge soldering tip of the soldering device of the present invention;
Fig. 7 is a graph depicting the tip temperature performance of the battery cartridges of the soldering device; and
Fig. 8 is a graph depicting tip temperature degradation for successive soldering events for the various battery cartridges of the soldering device of the present invention.

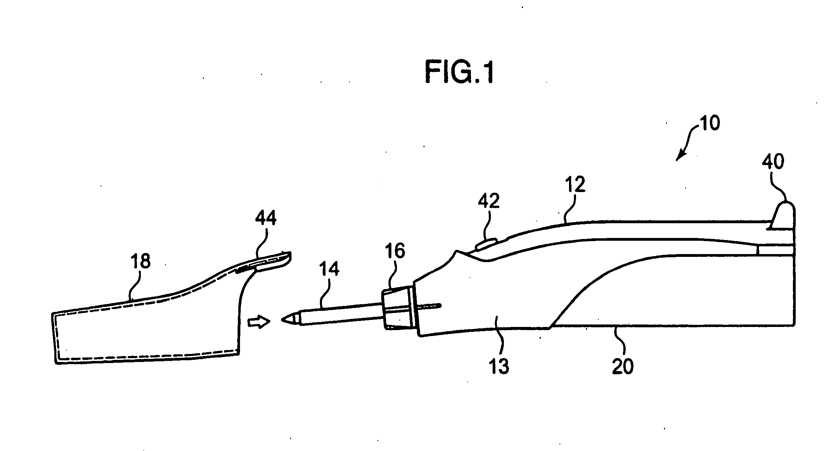

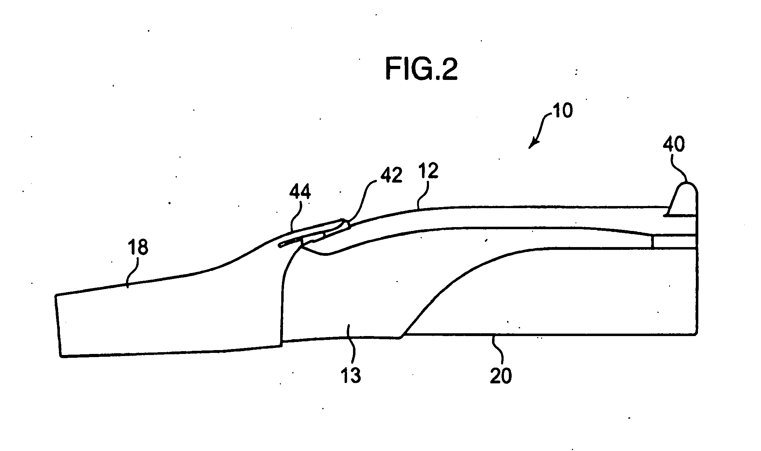

Figures. 1 and 2 depict side views of a soldering device 10 according to the present invention. The soldering device 10 includes a handle 12 onto which a cartridge soldering tip 14 may be mounted by the use of a securing nut 16. The soldering device preferably includes a protection cap 18 shown removed to Figure 1 and shown attached in Figure 2 to the handle 12. The protection cap 18 covers the cartridge soldering tip 14 when it is not in use.

The soldering device 10 also includes a battery cartridge 20 which is removably attached to the handle 12. The battery cartridge 20 provides the electrical power for heating the cartridge soldering tip 14.

The battery cartridge 20 depicted in Figures 1 and 2 is preferably configured to contain four AA batteries arranged in two rows of two batteries placed end to end.

The AA batteries may be either the non-rechargeable alkaline batteries or rechargeable nickel hydride batteries.

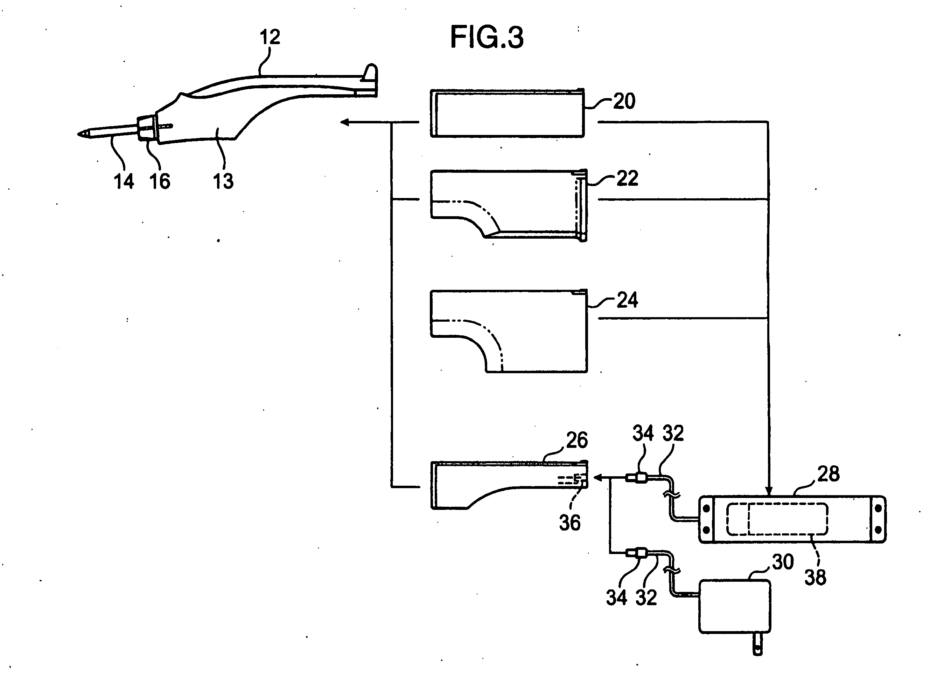

According to the invention, the battery cartridge 20 is removable and indeed replaceable with alternate battery cartridges 22 and 24 depicted in Figure 3. Battery cartridge 22 contains a lithium ion type rechargeable battery. Battery cartridge 24 contains nickel hydride rechargeable batteries.

As another alternative to the battery cartridges 20, the soldering device may have an attachment 26 which is essentially an electrical feed through system that allows for the attachment of a cartridge holder 28, which may for example be held in a pocket or attached to the belt of a user, and is configured to hold any of the battery cartridges 20, 22 and 24. Alternatively, attachment 26 allows for attachment to an AC adapter 30 that may be plugged into an AC power outlet and convert the AC power to a nine volt DC output. Both the cartridge holder 28 and the AC adapter 30 have a cable 32 terminating in a connector plug 34 which is configured to plug into a connector receptacle 36 on attachment 26 to provide electrical power thereto. The attachment 26 can be installed into the soldering device 10 in the space configured to receive the battery cartridge 20. For ease of use, the cartridge holder 28 may include a belt clip 38 to allow a user to secure the cartridge holder 28, and a battery cartridge attached thereto to a work belt or pocket and yet still provide freedom to work in a remote location without AC power.

As depicted in Figures. 1 through 3, the handle 12 of the soldering device 10 includes a strap attach extension 40 at its rearward end. This allows for a strap or other securement device to be attached to the end of the handle 12. In addition, mounted on the handle 12 near the forward end where the operator's index finger will have ready access is on-off switch 42. When pushed forward towards the cartridge soldering tip 14, the on-off switch 42 is in the "on" position. When pushed backwards towards the strap attach extension 40, the on-off switch 42 is in the "off" position. As best depicted in Figure 2, the protection cap 18 features a switch lip 44 extending so as to interengage with the on-off switch 42 whenever the protection cap 18 is installed over the handle 12 such that the switch lip 44 will push the on-off switch 42 to the "off" position. This is a protection feature to prevent the soldering device 10 from inadvertently being turned on when the protection cap 18 is in place.

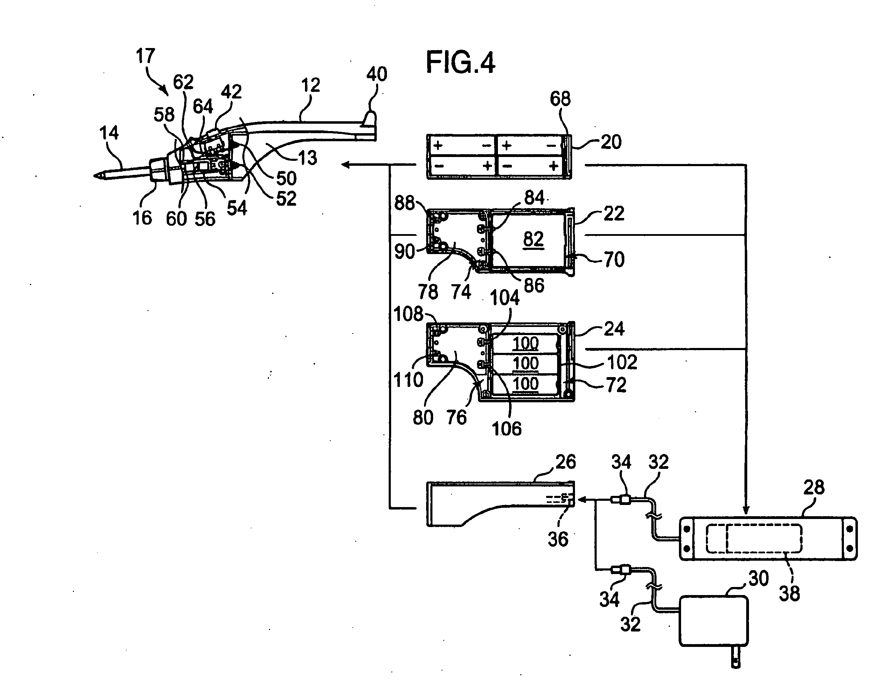

Figure 4 depicts a side partially cut away view of the soldering device 10 in particular the handle 12 and battery cartridges 20, 22, and 24. As depicted, the electronics included within the handle 12 are minimized. The handle 12 includes an electrical component 17 which is constructed as follows. There are arranged two spring contacts 50 and 52 which provide the means for electrical contact between the handle 12 and the various cartridges or attachments 20 through 26. Spring contact 50 is electrically connected to a first pole of a two position on-off switch 42. The spring contact 52 is connected to a leaf contact connector 54 which electrically contacts one electrical terminal 56 on the soldering tip cartridge 14. A second leaf contact connector 58 is adapted to receive electrical power from the on-off switch 42 when it is in the "on" position and is configured so as to contact a second electrical terminal 60 on the cartridge soldering tip 14. The handle 12 may also include an LED or light 62 which is electrically connected to the switch 42 so that it is illuminated whenever the switch 42 is turned on. In addition, the LED circuit may include a resistor 64 for minimizing the utilization of electric power going to the LED 62.

In this configuration, the handle 12 does not have the capacity to regulate the amount of power delivered from the battery cartridges 20, 22 or 24 to the soldering tip. When the AA battery cartridge 20 is used, the amount of power that is provided by the four AA batteries is suitable to power the soldering tip without the requirement for regulation. Accordingly, the simple construction of the handle 12 is satisfactory for utilization with the AA battery cartridge and the cartridge tip 14 which is designed for utilization with the soldering device. The cartridge tip 14 is described in greater detail below.

As shown near the top of Figure 4, the AA battery cartridge 20 includes four AA batteries mounted within a housing. The top set of AA batteries has the positive terminal pointing towards the spring connector 50 while the bottom set of batteries has a negative terminal pointing towards the spring connector 52 on the handle 12. At the rear end of the battery cartridge 20 is an electrical contact 68 to both contact the positive end of the battery positioned on the bottom and the negative end of the battery positioned on the top to thereby connect all four of the batteries in a series connection. The battery cartridge 20 includes openings at its forward end so that the contacts 50 and 52 of the handle 12 directly contact the exposed battery terminals when the batteries are in place within the cartridge 20 and so there is no need for additional electrical conductors to interconnect to the batteries within the cartridge 20 and the overall size of the battery cartridge 20 is thereby minimized.

By comparison to the AA battery cartridge 20, the battery cartridge 22 for the lithium ion battery and the battery cartridge 24 for the nickel hydride battery both include a first chamber for containing the battery or batteries, 70 and 72 respectively, and a second chamber 74 and 76, respectively for mounting a circuit board 78 and 80, respectively.

The battery cartridge 22 contains a lithium ion battery 82 having positive and negative terminals 84 and 86 respectively. The lithium ion battery is generally rectangular in shape and fits within the chamber 70 of the battery cartridge 22. The circuit board 78 within the chamber 74 of battery cartridge 22 includes electrical contacts to both contact positive terminal 84 and the negative terminal 86 of the lithium ion battery 82 as well as terminals 88 and 90 that allow interconnection to the spring connectors 50 and 52 of the handle 12. The circuit board 78 includes a control circuit for controlling the output power of the lithium ion battery 82 provided to the cartridge soldering tip 14 whenever the on-off switch 42 is in the "on" position, to maintain a desired tip temperature. The control circuit controls the tip temperature by cycling the delivery of power from the battery to the cartridge tip.

Battery cartridge 24 includes a chamber 72 adapted to hold at least two and preferably six nickel hydride batteries 100. The chamber 72 includes an electronic contact board 102. to provide series connections with the various ends of the batteries 100. The chamber 76 including the circuit board 80 is adapted to allow the circuit board 80 to have contacts 104 and 106 that electrically contact to a circuit on the forward end of the chamber 72 to allow interconnection of the positive and negative terminal of the plurality of batteries 100 to provide a complete series circuit to deliver power from the nickel hydride batteries 100 to the contacts 104, 106 of the circuit board 80. The circuit board 80 also includes electrical contact terminals 108 and 110 for interconnecting to the spring contacts 50 and 52 of the handle 12 whenever the battery cartridge 24 is installed into the handle 12.

The circuit board 80 includes the circuitry for controlling the output power delivered to the cartridge soldering tip 14 to maintain a desired tip temperature so that too much power is not delivered during normal usage of the cartridge soldering tip 14. The circuitry for controlling the power output for the battery cartridges 22 and 24 by switching the delivery of power is dependent upon the required input power for particular type of cartridge soldering tip 14, and the desired tip temperature. However, generally, the circuit boards are designed to take the input power from the lithium ion battery in the battery cartridge 22 or the nickel hydride battery in the battery cartridge 24 and control the battery cartridge output within a range of a 7.2 to 7.4 volts.

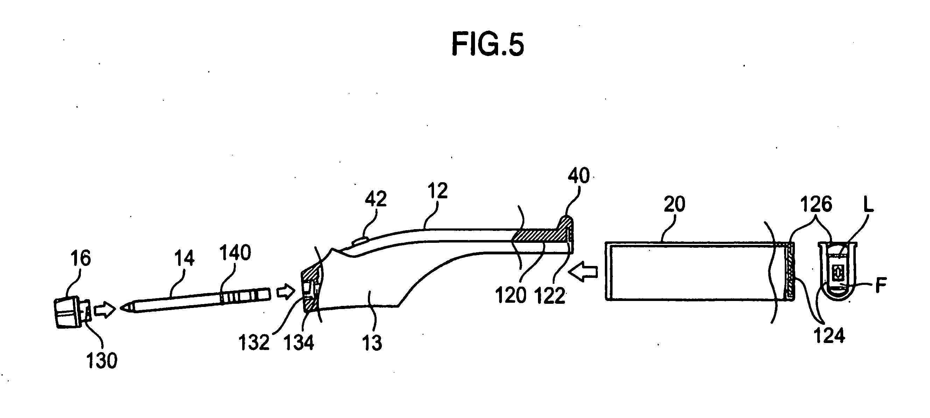

In Figures 4 and 5, each of the cartridges 20, 22 and 24 as well as the attachment 26 includes a sliding lock assembly 124 having a mount release 126 on their rear face that allows for securing and disconnecting the cartridge to the handle 12. The forward end of each of the cartridges 20, 22 and 24 as well as the attachment cartridge 26 are sized to fit within a power cartridge mount 13 of the handle 12 such that the attachment mount release 126 at the rear edge of the respective cartridge can secure the cartridge in place. Accordingly, the cartridges are easily removed from the handle 12 and can be replaced.

Figure 5 depicts an exploded partially cross-sectional view of the cartridge system of the soldering device 10. The rear portion of the handle 12 is cut away to expose the inner surface 120 which has a slot 122 extending upward. In Figure 5, the battery cartridge 20 is depicted. The battery cartridge has a rear end having a sliding lock assembly 124 with a mount release 126 that moves up so that it can be inserted into slot 122 of the handle 12 to secure the battery cartridge 20 in place and allow the battery cartridge 20 to be removed when the sliding lock assembly 124 and mount release 126 move down, where upon the battery cartridge 20 can be slid rearward and extracted from the handle 12. This simple configuration allows the respective battery cartridges to be easily installed and removed from the handle 12.

In Figure 5, the securing nut 16 is shown removed forward from the soldering tip cartridge 14 which slides into a receiving hole in the handle 12. Once the cartridge soldering tip 14 is installed, the securing nut 16 is inserted over the cartridge soldering tip 14 to allow securement to the handle 12. As configured, the securing nut 16 includes a plurality of beveled tabs 130 which extend through slots 132 in the receiving orifice 134 of the handle 12 and thereby the securing nut 16 can be rotated in order to lock in place in the handle 12. Alternatively, the securing nut 16 could have threads which mount to a threaded orifice on the end of the soldering handle 12 and there are other types of attachment mechanisms which could be utilized. For convenience and ease of use, the relatively simple configuration depicted is used so that the securing nut 16 only needs to be rotated a partial rotation in order to be locked in place.

The cartridge soldering tip 14 as shown in Figure 5 has a ridge 140 which engages with an inner lip (not shown) of the securing nut 16 and is thereby positioned securely in place. As noted above, the cartridge soldering tip 14 also has at least two electrical terminals 56 and 60 which connect electrical power received from the handle 12.

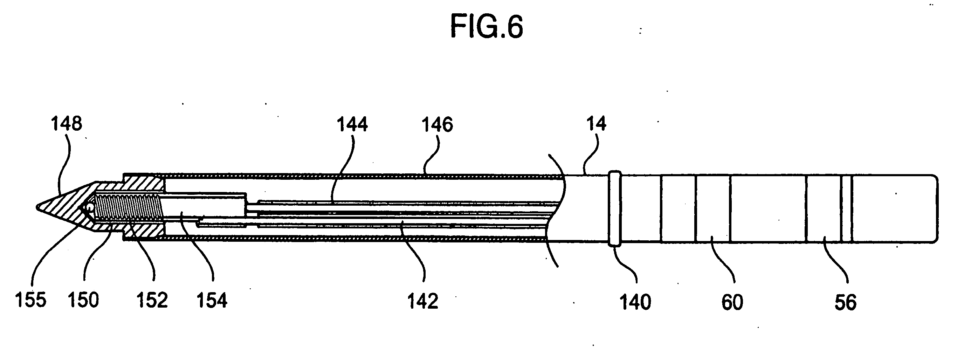

A cross-sectional view of the cartridge soldering tip 14 is depicted in Figure 6. Therein, the ridge 140 as well as the two electrical terminals 56 and 60 are illustrated at the rearward end of the cartridge tip 14. Positioned inside the cartridge soldering tip 14 are wire leads 142 and 144 which extend forward and are protected by a thin protection pipe 146. Mounted at the forward end of the protection pipe 146 is a soldering iron tip 148 which can have a number of different shapes. The soldering iron tip 148 is preferably formed from a copper material and may include an iron coating. The soldering iron tip 148 includes a hollow interior portion 150 which receives a heater element 152 electrically connected to the connections or wire leads 142 and 144. The heater element 152 is a wire wound about a ceramic core 154. The tip temperature is controlled, if necessary through a feedback sensor 155 which interacts with the circuit boards on the battery cartridge 22 and 24.

The cartridge soldering tip 14 is configured to allow ease of interchangeability depending on the particular configuration of the tip design desired by the operator. The ease of replacement also allows the cartridge soldering tip 14 to be replaced when the tip is eroded to the point where it is no longer serviceable. The relatively simple construction of the cartridge soldering tip 14 is specifically designed to be utilized with the voltage outputs provided by the interchangeable battery packs and yet provide adequate heat to allow soldering works irrespective of the cartridge pack that is utilized. The thin wall of the protection pipe minimized the heat transfer rearward towards the handle 12 so as to concentrate the heat at the soldering iron tip.

The present invention provides a number of advantages in that the operator or user of the soldering device 10 can choose what battery cartridge to mount on the handle 12 depending on the soldering performance requirements, the operating time and the relative cost of the various cartridges. This allows the operator to choose the right battery or power pack for the work that is being done and allows the operator to tailor the power output to the requirements for the specific task while, if desirable, minimizing the cost that the operator needs to pay to acquire one or more of the various cartridge packs.

The cartridge soldering tip 14 is configured to prevent the heat transferring from the protection pipe to the soldering device and configured so that a majority of the heater element 152 is not even within the dimensions of the protection pipe 146. The protection pipe 146 has a minimal thickness of example approximately 0.15 mm. so that it provides the necessary structural rigidity yet minimizes the heat transfer. To improve the heat conductivity from the heater element 152 to the outer surface of the soldering iron tip, the hollow portion 150 within the soldering tip extends as far as possible into the soldering tip so that the heater can be dimensioned and disposed within the soldering tip so that heat from the heater effectively transfer directly to the soldering iron tip and therethrough to the surface of the soldering iron tip. To increase the heat produced from the heater, the diameter of the heater wire is minimized, for example to approximately 0.18 mm, and the heater wire leads are formed from a copper - nickel alloy

The various types of battery cartridges 20, 22 and 24 that are used with the handle 12 can be provided either individually or as a set with the handle 12 depending on the user's preference. Generally, the battery cartridge 20 for the four AA batteries is suitable for hobby or non-industrial use featuring low cost for the overall system. Indeed, the overall cost is minimized by utilizing the terminals of the battery as the terminals of the cartridge assembly as discussed above. This also allows easy replacement of the batteries as any kind of AA batteries are generally available in the market place.

The cartridge having the battery cartridge 24 having the nickel hydride batteries features a higher output and higher performance, wherein temperatures controlled again at a relatively low cost however, the charging time for these types of batteries is longer and the size of the battery cartridge when six batteries are configured for use is relatively large as compared to the four AA battery cartridge 20.

The battery cartridge 22 for containing the lithium ion battery also features a high performance with temperature control, however this type of battery is more expensive and is generally designed for a particular use. The advantages would also include a smaller battery cartridge and a relatively short charging time as compared to the charging time of the nickel hydride batteries in the battery cartridge 24.

As compared to these battery cartridge configurations, the use of the attachment cartridge 26 which may be plugged into either a cartridge holder 28 to which any of the cartridges 20, 22, and 24 may be attached, or to the AC adapter 30, provide even more flexibility for the user who needs extended duration power for remote locations using the cartridge holder 28 and spare battery cartridges or who may have access to AC power and therefore wishes to conserve on battery usage by simply plugging into the AC adapter.

For each of the configurations, it is necessary to obtain a relatively high temperature at the tip in order to perform effectively soldering works. High temperature in the tip requires both attainment of the high temperature and it is stabilized regardless of the amount of the battery power that is left. The following chart compares the performance of each of the types of battery cartridges tested with the foregoing configuration.

| | Alkaline/nickel hydride cartridge (4 batteries) | | Nickel hydride cartridge (6) | Lithium-ion cartridge |
|---|---|---|---|---|
| Used battery | Alkaline (AA) | Nickel hydride (AA) | Nickel hydride (AA)/(AAA) | Lithium ion (exclusive) |
| Controlling method | Saturate | Saturate | Controlled | Controlled |
| Possible time of use | About 30min | 80min. | 120 min. | 70min. |
| Price | Low priced | Middle priced | Middle priced | Expensive |
| Charging time | Not applicable | 4-10h | 4-10h | 1h |

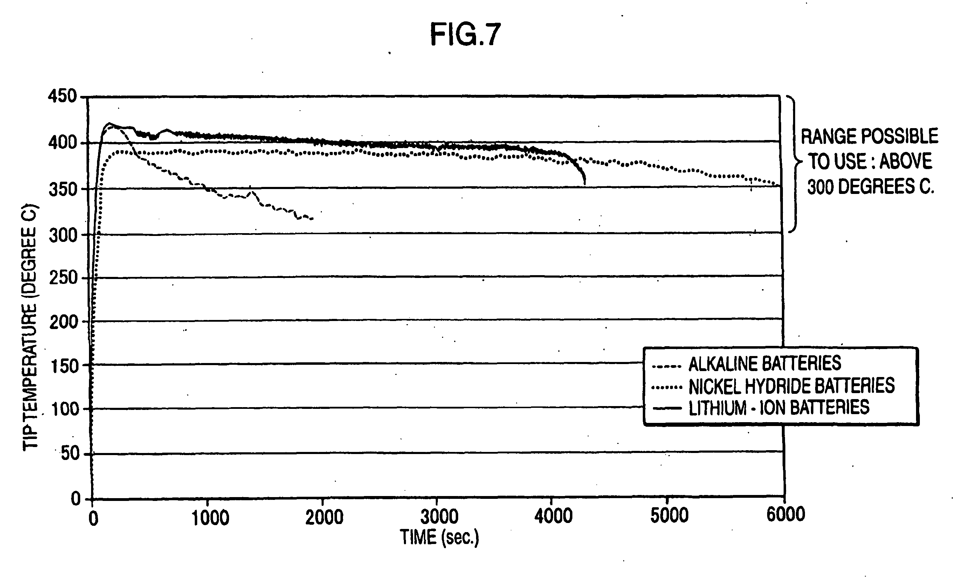

Attached as Figure 7 is a graph depicting the property of the tip temperature when the battery pack is fully charged until the battery power is lost. As depicted, the battery power is reduced or the temperature drops most with the alkaline batteries and least with the lithium ion batteries. In this figure, the tip temperature can rapidly rise to about 300 degrees Centigrade where it is useful. The startup time for the alkaline batteries is approximately 80 seconds and has an operable life of about 30 minutes. By comparison, the lithium ion battery has an operable life of over one hour and a start up time of about 30 seconds, while the nickel hydride battery has an operable time of over 2 hours and a start up time of about 2 minutes.

The graph of Figure 8 shows the results of a test of the recovery property when the soldering iron is used a plurality of times in succession. The test was conducted on a solder wire having a diameter of 1.6 mm. and a length of approximately 5.0 mm. soldered to a circuit board substrate having a 10 sq. mm. contact area for a 3 second solder interval. The alkaline and nickel hydride battery cartridge was used to make 6 to 7 repetitive solder connections. By comparison, the lithium ion battery allows soldering of up to approximately 1000 times before the battery lost power. The graph depicts each of the soldering times for the soldering occurrences for the alkaline and the nickel hydride batteries and depicts the tip temperature on the vertical axis over time duration on the horizontal axis.

As may be appreciated from the foregoing charts, that lithium ion battery provides the most power and the longest soldering life for one charge, however it is the most expensive yet easy to recharge. The various configurations available, however, allows the operator to choose both the performance requirement and the expense associated with the soldering operations. The present invention thus provides a soldering device 10 which includes interchangeable cartridge assemblies and a convenient replacement system so that the cartridge can be matched to the handle 12 for necessary and desired performances. The circuitry for maintaining the power output for the higher power output cartridge configurations is included within the cartridge assembly as opposed to in the handle assembly, so the handle assembly is primarily an electrical contact feature system thereby minimizing its cost. The assembly of the foregoing soldering system has not heretofore been available and provides users with a viable option to existing battery powered soldering irons or gas powered soldering irons for industrial applications.

The foregoing description is provided to describe the present invention but is not intended to limit the scope of the invention which is to be defined by the claims appended hereto.

## Claims

1. A soldering device (10) comprising:
a handle (12) for receiving a cartridge soldering tip (14), the handle (12) including an electrical component for coupling electrical power to the cartridge soldering tip (14) and a power cartridge mount (13) for mounting a power cartridge (20, 22, 24, 26);
a first power cartridge (22, 24) to be mounted to the power cartridge mount (13) of the handle (12) to provide electrical power to the cartridge soldering tip (14), and **characterized by**
at least a second power cartridge (20, 26) which is selected from the group consisting of:
a cartridge (20) for containing AA batteries; and
an attachment cartridge (26) for connecting to a power supply via a cable;
wherein the first power cartridge (22, 24) comprises a first chamber (70, 72) and at least one battery (82, 100) therein, the battery being a lithium ion battery (82) or a nickel-hydride battery (100);
and wherein the first power cartridge (22, 24) further comprises a second chamber (74, 76) for holding a circuit board (78, 80) having a control circuitry for controlling the output power delivered to the cartridge soldering tip (14) to maintain a desired tip temperature, and wherein said power cartride mount (13) is for mounting one of said first (22,24) and second power cartridges (20,26).

2. The soldering device (10) of claim 1, further comprising:
an on-off switch (42) on the handle (12); and
a protection cap (18) configured to attach to the handle (12) and cover the cartridge soldering tip (14), the protection cap (18) having a switch lip (44) to force the on-off switch (42) of the handle (12) to the off position whenever the protection cap (18) is attached to the handle (12).

3. The soldering device (10) of any one of the preceding claims, wherein the power cartridges (20, 22, 24, 26) are detachable and replaceable.

4. The soldering device (10) of any one of the preceding claims, wherein the battery (82, 100) is a lithium ion battery.

5. The soldering device (10) of any one of the preceding claims, wherein the battery (82, 100) is at least two nickel hydride batteries.

6. The soldering device (10) of any one of the preceding claims, further comprising the attachment cartridge (26) and a cartridge holder (28) adapted to receive one of the battery cartridges ( 20, 22, 24) and connect to the attachment cartridge (26) by a cable (32).

7. The soldering device (10) of any one of the preceding claims, further comprising the attachment cartridge (26) and an AC adaptor (30) to convert AC current to a DC voltage suitable for powering the soldering device, the AC adaptor (30) connected to the attachment cartridge (26) by a cable (32).

8. The soldering device (10) of one of any one of the preceding claims, wherein the soldering device is adapted to receive a plurality of cartridge soldering tips (14) each having a contact end and a tip end, and each tip is designed for a particular soldering application, and the soldering device further comprises an internal connector and switch assembly within the handle (12) adapted to receive the contact end of one of the plurality of soldering tips, and the power cartridge (20, 22, 24,26) adapted to be electrically coupled to the internal connector and switch assembly.

## Patentansprüche

1. Lötvorrichtung (10), die umfasst:
einen Griff (12) zum Aufnehmen einer Patronenlötspitze, wobei der Griff (12) eine elektrische Komponente zum Einkoppeln elektrischer Leistung an die Patronenlötspitze (14) und eine Strompatronenbefestigung bzw. -halterung (13) zum Montieren einer Strompatrone (20, 22, 24, 26) umfasst;
eine erste Strompatrone (22, 24), die an der Strompatronenhalterung (13) des Griffs (12) montiert ist, um elektrischen Strom an die Patronenlötspitze (14) zuzuführen; und
**gekennzeichnet durch**:
wenigstens eine zweite Strompatrone (20, 26), die aus der Gruppe ausgewählt wird, die besteht aus:
einer Patrone (20) zum Aufnehmen von AA-Batterien; und
einer Zubehör- bzw. Zusatzpatrone (26) zum Verbinden mit einer Stromversorgung über ein Kabel;
wobei die erste Strompatrone (22, 24) eine erste Kammer (70, 72) und wenigstens eine Batterie (82, 100) darin umfasst, wobei die Batterie eine Lithiumionenbatterie (82) oder eine Nickelhydridbatterie (100) ist, und
wobei die erste Strompatrone (22, 24) ferner eine zweite Kammer (74, 76) zum Aufnehmen einer Schaltungsplatine (78, 80) mit einer Steuer- bzw.
Regelungsschaltung zum Steuern bzw. Regeln der an die Patronenlötspitze (14) zugeführten Ausgangsleistung umfasst, um eine gewünschte Spitzentemperatur zu halten, und wobei die Strompatronenbefestigung (13) für die Montage einer aus der ersten (22, 24) und zweiten Strompatrone (20, 26) vorgesehen ist.

2. Lötvorrichtung nach Anspruch 1, die ferner umfasst:
einen Ein-Aus-Schalter (42) auf dem Griff (12); und
eine Schutzkappe (18), die aufgebaut ist, um den Griff (12) zu befestigen und die Patronenlötspitze (14) zu bedecken, wobei die Schutzkappe (18) eine Schalterlippe (44) hat, um den Ein-Aus-Schalter (42) des Griffs (12) immer dann in die Aus-Stellung zu zwingen, wenn die Schutzkappe (18) an dem Griff (12) befestigt ist.

3. Lötvorrichtung (10) nach einem der vorangehenden Ansprüche, wobei die Strompatronen (20, 22, 24, 26) abnehmbar und austauschbar sind.

4. Lötvorrichtung (10) nach einem der vorangehenden Ansprüche, wobei die Batterie (82, 100) eine Lithiumionenbatterie ist.

5. Lötvorrichtung (10) nach einem der vorangehenden Ansprüche, wobei die Batterie (82, 100) wenigstens zwei Nickelhydridbatterien aufweist.

6. Lötvorrichtung (10) nach einem der vorangehenden Ansprüche, die ferner die Zusatzpatrone (26) und eine Patronenhalterung (28) umfasst, welche geeignet ist, eine der Batteriepatronen (20, 22, 24) aufzunehmen und durch ein Kabel (32) mit der Zusatzpatrone (26) zu verbinden.

7. Lötvorrichtung (10) nach einem der vorangehenden Ansprüche, die ferner die Zusatzpatrone (26) und einen Wechselstromadapter (30) umfasst, um Wechselstrom in einen Gleichstrom umzuwandeln, der geeignet ist, die Lötvorrichtung mit Leistung zu versorgen, wobei der Wechselstromadapter (30) durch ein Kabel (32) mit der Zusatzpatrone (26) verbunden ist.

8. Lötvorrichtung (10) nach einem der vorangehenden Ansprüche, wobei die Lötvorrichtung geeignet ist, eine Vielzahl von Patronenlötspitzen (14) aufzunehmen, von denen jede ein Kontaktende und ein Spitzenende hat, wobei jede Spitze für eine bestimmte Lötanwendung konzipiert ist, und die Lötvorrichtung ferner eine innere Anschluss- bzw. Stecker- und Schalteranordnung innerhalb des Griffs (12) umfasst, die geeignet ist, das Kontaktende einer der Vielzahl von Lötspitzen aufzunehmen, und die Strompatrone (20, 22, 24, 26) geeignet ist, mit der inneren Stecker- und Schalteranordnung elektrisch verbunden zu werden.

## Revendications

1. Dispositif de brasage (10) comprenant :
une poignée (12) pour la réception d'une pointe de brasage à cartouche (14), la poignée (12) incluant un composant électrique pour le couplage de la puissance électrique à la pointe de brasage à cartouche (14) et un dispositif de montage de cartouche de puissance (13) pour le montage d'une cartouche de puissance (20, 22, 24, 26) ;
une première cartouche de puissance (22, 24) devant être montée sur le dispositif de montage de cartouche de puissance (13) de la poignée (12) afin de fournir la puissance électrique à la pointe de brasage à cartouche (14) ; et
**caractérisé par**
au moins une seconde cartouche de puissance (20, 26) qui est sélectionnée parmi le groupe constitué de :
une cartouche (20) pour contenir des batteries du type « AA » ; et
une cartouche à fixation (26) pour la connexion à une alimentation en puissance par l'intermédiaire d'un câble ;
dans lequel la première cartouche de puissance (22, 24) comprend une première chambre (70, 72) et au moins une batterie (82, 100) dedans, la batterie étant une batterie aux ions de lithium (82) ou une batterie hybride au nickel (100) ;
et dans lequel la première cartouche de puissance (22, 24) comprend en outre une seconde chambre (74, 76) pour accrocher une carte à circuit imprimé (78, 80) qui a un circuit de commande pour commander la puissance de sortie fournie à la pointe de brasage à cartouche (14) afin de maintenir une température désirée de la pointe, et
dans lequel ledit dispositif de montage de cartouche de puissance (13) est prévu pour le montage d'une cartouche de puissance parmi lesdites premières cartouches de puissance (22, 24) et lesdites seconde cartouches de puissance (20, 26).

2. Dispositif de brasage (10) selon la revendication 1, comprenant en outre :
un commutateur de marche/arrêt (42) sur la poignée (12) ; et
un capuchon de protection (18) configuré pour la fixation sur la poignée (12) et pour la couverture de la pointe de brasage à cartouche (14), le capuchon de protection (18) ayant un bec de commutation (44) afin d'exercer une force sur le commutateur de marche/arrêt (42) de la poignée (12) vers la position d'arrêt à chaque fois que le capuchon de protection (18) est fixé sur la poignée (12).

3. Dispositif de brasage (10) selon l'une quelconque des revendications précédentes, dans lequel les cartouches de puissance (20, 22, 24, 26) peuvent être démontées et remplacées.

4. Dispositif de brasage (10) selon l'une quelconque des revendications précédentes, dans lequel la batterie (82, 100) est une batterie aux ions de lithium.

5. Dispositif de brasage (10) selon l'une quelconque des revendications précédentes, dans lequel la batterie (82, 100) est constitué d'au moins deux batteries hybride au nickel.

6. Dispositif de brasage (10) selon l'une quelconque des revendications précédentes, comprenant en outre la cartouche à fixation (26) et un dispositif d'accrochage de cartouche (28) adapté pour recevoir une des cartouches de batterie (20, 22, 24) et pour la liaison à la cartouche à fixation (26) par un câble (32).

7. Dispositif de brasage (10) selon l'une quelconque des revendications précédentes, comprenant en outre la cartouche à fixation (26) et un adaptateur AC (30) afin de convertir un courant AC en une tension DC qui convient à l'alimentation en puissance du dispositif de brasage, l'adaptateur AC (30) étant connecté à la cartouche à fixation (26) par un câble (32).

8. Dispositif de brasage (10) selon l'une quelconque des revendications précédentes, dans lequel le dispositif de brasage est adapté pour recevoir une pluralité de pointes de brasage à cartouche (14), ayant chacune une extrémité de contact et une extrémité à pointe, et dans lequel chaque pointe est conçue pour une application de brasage particulière, et dans lequel le dispositif de brasage comprend en outre un connecteur interne et un assemblage de commutateur à l'intérieur de la poignée (12), adaptés pour recevoir l'extrémité de contact d'une pointe parmi la pluralité de pointes de brasage, et dans lequel la cartouche de puissance (20, 22, 24, 26) est adaptée pour être couplée électriquement au connecteur interne et à l'assemblage de commutateur.
